(19) Europäisches Patentamt
European Patent Office
Office européen des brevets

(11) Numéro de publication: **0 129 628**
**A1**

# (12) DEMANDE DE BREVET EUROPEEN

(21) Numéro de dépôt: **83401301.3**

(22) Date de dépôt: **23.06.83**

(51) Int. Cl.[4]: **C 07 F 9/38**
A 61 K 31/66

(43) Date de publication de la demande:
**02.01.85 Bulletin 85/1**

(84) Etats contractants désignés:
**AT BE CH DE FR GB IT LI LU NL SE**

(71) Demandeur: **Richard, Marcel**
**29 Boulevard Gambetta**
**F-72000 Aubenas(FR)**

(72) Inventeur: **Richard, Marcel**
**29 Boulevard Gambetta**
**F-72000 Aubenas(FR)**

(74) Mandataire: **Combe, André et al,**
**CABINET BEAU DE LOMENIE 55 rue d'Amsterdam**
**F-75008 Paris(FR)**

## (54) Médicament, utilisable notamment en psychiatrie, utilisant comme principe actif un N- alkylcarbamoylphosphate de lithium.

(57) La présente invention concerne des produits nouveaux, utilisables dans les médicaments, caractérisés en ce qu'ils répondent à la formule:

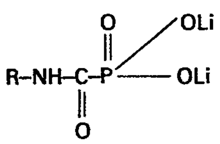
(I)

dans laquelle R est un radical alkyle linéaire ou ramifié, et les sels pharmaceutiquement acceptables des produits de formule (1), elle concerne également un procédé pour la préparation desdits produits et les médicaments, utilisables notamment en psychiatrie contenant ledit produit.

EP 0 129 628 A1

Médicament, utilisable notamment en psychiatrie, utilisant comme principe actif un N-alkylcarbamoylphosphate de lithium.

La présente invention concerne un nouveau médicament utilisable notamment en psychiatrie.

Le médicament selon l'invention est caractérisé en ce qu'il comporte un produit de formule

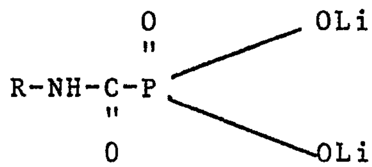

( 1 )

dans laquelle R est un radical alkyle linéaire ou ramifié et plus particulièrement un radical alkyle inférieur ayant 1 à 4 atomes de carbone, ou un sel pharmaceutiquement acceptable dudit produit de formule (1).

Parmi les produits de formule (1), spécialement intéressants, on mentionnera le composé dans lequel R est $CH_3$.

L'invention concerne également un procédé de préparation des produits de formule 1, ce procédé étant caractérisé en ce qu'on fait réagir un isocyanate d'alkyle sur un acide phosphorique $PO_4H_3$ dont deux fonctions acides ont été bloquées. Pour réaliser le blocage de ces deux fonctions acides on peut :

- soit réaliser le sel de triéthylamine de l'acide phosphorique que l'on fera réagir avec l'isocyanate ;
- soit utiliser directement le phosphate dilithique que l'on fait également réagir avec l'isocyanate.

L'invention concerne enfin les médicaments qui contiennent au moins un produit de formule (1). Il a été trouvé en effet que les produits de formule (1) avaient une toxicité faible (la $DL_{50}$ pour la souris et pour le produit de formule 1 dans lequel R est $CH_3$ étant environ 3 200 mg/kg par voie orale) et une activité pharmacologique qui peut s'exprimer comme suit :

- diminution et/ou blocage des systèmes dopaminergiques,
- augmentation, au moins transitoire, de la systhèse de la sérotonine,
- pouvoir analgésique,

les conséquences de ces actions se retrouvant dans les constatations suivantes :

- diminution de l'agressivité,
- diminution de la motilité et de la curiosité,
- protection contre les convulsions.

On voit que les produits de formule I ont une activité de même type que celle du carbonate de lithium mais avec une intensité nettement supérieure.

Les exemples non limitatifs ci-après illustrent l'invention.

Exemple 1

Préparation du N-méthyl-carbamoylphosphate de lithium.

On dissout 0,1 mole d'acide phosphorique cristallisé dans 30 ml d'acétonitrile anhydre et on y ajoute 0,1 mole de triéthylamine anhydre tout en refroidissant le mélange avec de la glace.

On ajoute ensuite progressivement au mélange 0,1 mole d'isocyanate de méthyle.

On laisse revenir à température ambiante et on agite pendant 12 heures, le p H étant maintenu à 6 par addition de triéthylamine.

On concentre sous vide, reprend le produit sec par 200 ml d'eau et on neutralise la solution par adjonction de carbonate de lithium et d'hydroxyde de lithium jusqu'à virage de la phénolphtaléine.

Les sels de lithium insolubles sont filtrés et la solution est concentrée jusqu'à l'obtention d'un produit pulvérulent.

On purifie par dissolution (et filtration éventuelle) dans de l'eau distillée et on précipite la solution obtenue par addition d'alcool éthylique absolu.

On filtre et on sèche.

On obtient un produit se présentant sous forme d'une poudre blanche dont le spectre NMR montre l'existence d'un doublet centré à 2,55 ppm (TMS) attribuable à $NH-CH_3$ et dont le spectre IR montre une bande principale à 1750 $cm^{-1}$ (carbamate).

Exemple 2

On a préparé le N-méthyl-carbamoylphosphate de lithium en réalisant tout d'abord la neutralisation partielle de l'acide phosphorique avec le carbonate (ou l'hydroxyde de lithium) puis on a fait réagir sur le produit obtenu, dans un solvant inerte, l'isocyanate de méthyle.

Les propriétés du N-méthyl-carbamoylphosphate de lithium de formule (1) ont été démontrées par les tests suivants réalisés sur des souris et/ou des chiens,

- test concernant l'agressivité induite par des chocs électriques :

  dose active 10 MEq par kilo

- test montrant l'activité du produit sur des convulsions produites par un électrochoc :

  protection de 40 % des sujets pour une dose de 5 MEq par kilo

- activité analgésique comparée (test plaque chaude)

  avec une dose de 13 MEq par kilo, on assure une protection de 42 % pour le produit selon l'invention (et de 27 % pour le carbonate de lithium)

- test évaluant le blocage des systèmes dopaminergines

  dose active à 100 % 6,75 MEq par kilo

  pour le carbonate de lithium on arrive à une dose active à 50 % en utilisant 10,115 MEq par kilo

- test sur la sécrétion de sérotonine

  dose active après 24 heures 6,75 MEq par kilo

pour le carbonate de lithium la dose correspondante (après 24 heures) serait de 10 MEq par kilo

- test de motilité

à une dose de 13,5 MEq par kilo, la motilité baisse de 36 %

pour le carbonate de lithium, à une dose correspondante, la motilité baisse de 12 %.

Ces résultats montrent l'activité certaine des produits de formule 1 et notamment du dérivé de formule (1) dans lequel R est $CH_3$.

Les médicaments contenant un produit de formule (1) (qui peut éventuellement être utilisé en association avec d'autres produits actifs) sont utilisables notamment en psychiatrie pour le traitement des états maniaco-dépressifs.

Ces médicaments sont conditionnés pour être administrés sous forme orale (comprimés, dragées, gélules, sirops), sous forme injectable et contiennent par unité de médication de 250 à 750 mg de produit actif.

## REVENDICATIONS

1 - Produits nouveaux, utilisables dans les médicaments, caractérisés en ce qu'ils répondent à la formule :

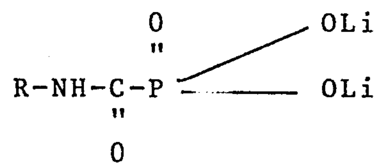

(1)

dans laquelle R est un radical alkyle linéaire ou ramifié, et les sels pharmaceutiquement acceptables des produits de formule (1).

2 - Produit selon la revendication 1, caractérisé en ce que R est $CH_3$.

3 - Procédé de préparation des produits de formule (1), caractérisé en ce que l'on fait réagir un isocyanate d'alkyle sur l'acide phosphorique $PO_4H_3$ dont deux des fonctions acides ont été bloquées.

4 - Procédé selon la revendication 3, caractérisé en ce que le blocage de deux fonctions acides de l'acide phosphorique a été réalisé avec la triéthylamine.

5 - Procédé selon la revendication 3, caractérisé en ce que le blocage de deux fonctions acides de l'acide phosphorique a été réalisé par réaction de l'acide avec un dérivé basique de lithium.

6 - Médicaments utilisables notamment en psychiatrie, caractérisés en ce qu'ils contiennent au moins un produit selon la revendication 1.

Office européen des brevets

# RAPPORT DE RECHERCHE EUROPEENNE

0129628
Numéro de la demande

EP 83 40 1301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 3) |
|---|---|---|---|
| A | UNLISTED DRUGS, vol. 21, no. 12, décembre 1969, article k, page 187<br>* article k: "Lithonate" *<br>--- | 1,6 | C 07 F 9/38<br>A 61 K 31/66 |
| A | EP-A-0 021 391 (BAYER AG)<br>* pages 1-4; page 20, exemple 8; revendications *<br>--- | 1,6 | |
| A | US-A-4 063 923 (J.C.Y. HAN)<br>* colonne 2, ligne 23; revendications *<br>--- | 1 | |
| E | FR-A-2 520 364 (RICHARD MARCEL)<br>* en entier *<br>----- | 1-6 | |
| | | | **DOMAINES TECHNIQUES RECHERCHES (Int. Cl. 3)** |
| | | | C 07 F 9/00 |

Le présent rapport de recherche a été établi pour toutes les revendications

| Lieu de la recherche | Date d'achèvement de la recherche | Examinateur |
|---|---|---|
| LA HAYE | 06-02-1984 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82